# EUROPEAN PATENT APPLICATION

(11) **EP 1 675 125 A1**
(43) Date of publication of application: **28.06.2006**
(21) Application number: 05028035.3
(22) Date of filing: 21.12.2005
(51) Int. Cl.: G11B 27/10, G11B 27/30, G11B 27/034

(54) **Method and apparatus for managing time information for recorded programs**

(30) Priority: 21.12.2004 KR 2004109278
(71) Applicant: LG ELECTRONICS INC., Seoul 150-010 (KR)
(72) Inventor: Kim, Byung Chul, Seongnam-si, Gyeonggi-do, 463-500 (KR)
(74) Representative: Vossius & Partner

(57) **Abstract**

A method and apparatus can manage time information for programs recorded on a recording medium such as by a DVD player or recorder. When an input content is recorded on the recording medium, the time at which the content was captured as well as the recording time can be recorded together with the content on the recording medium. Preferably, the capture time is received together with the content.

## Description

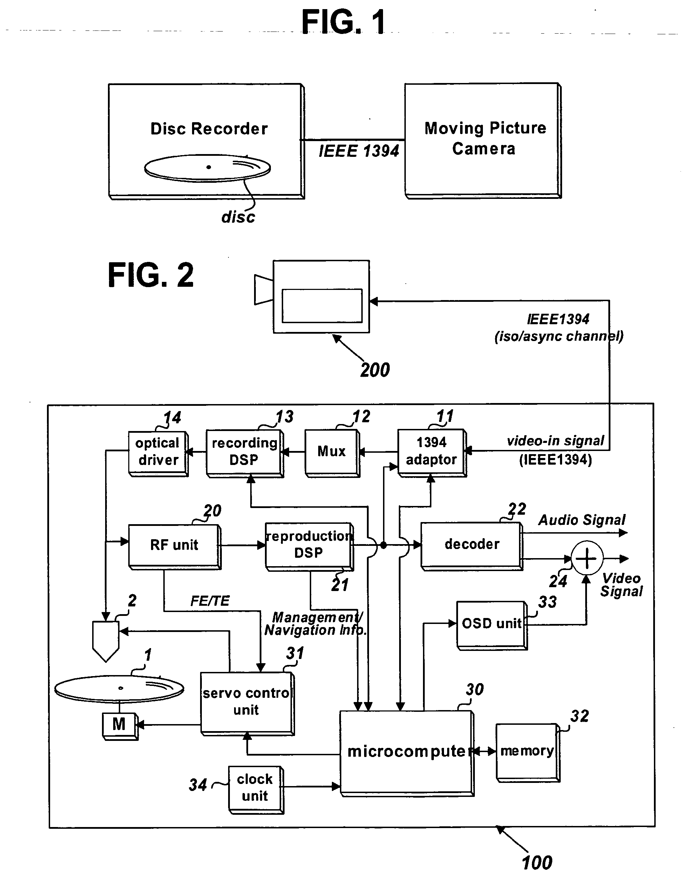

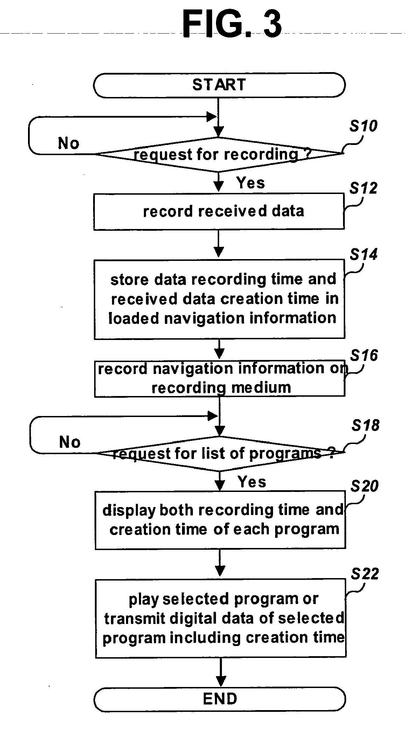

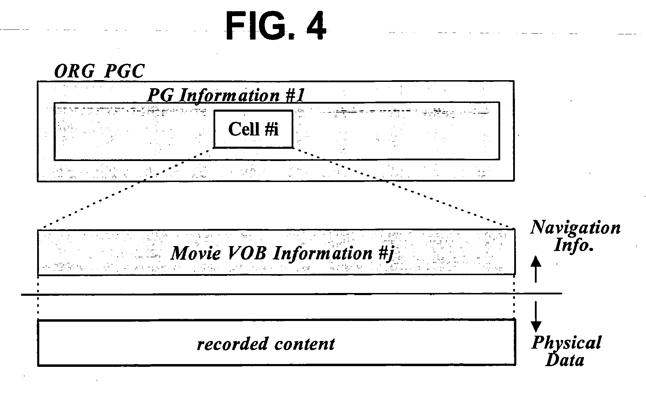

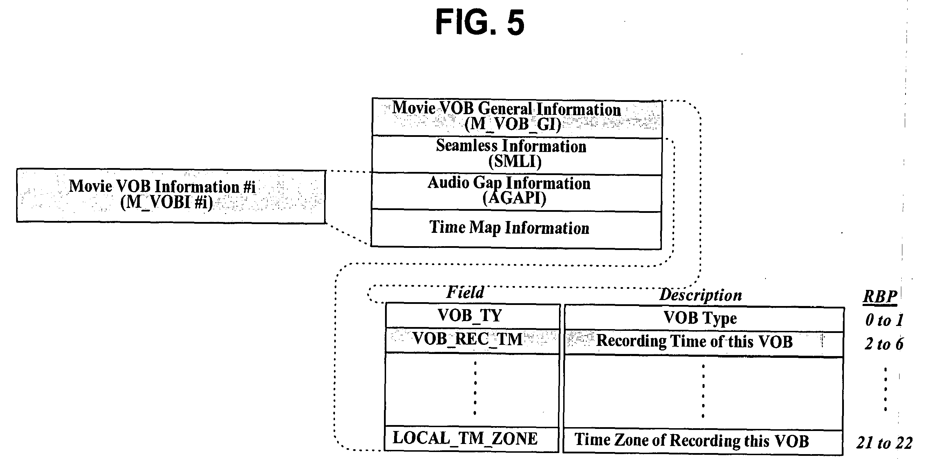

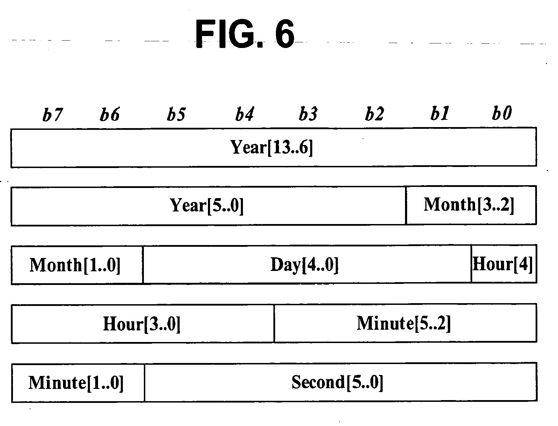

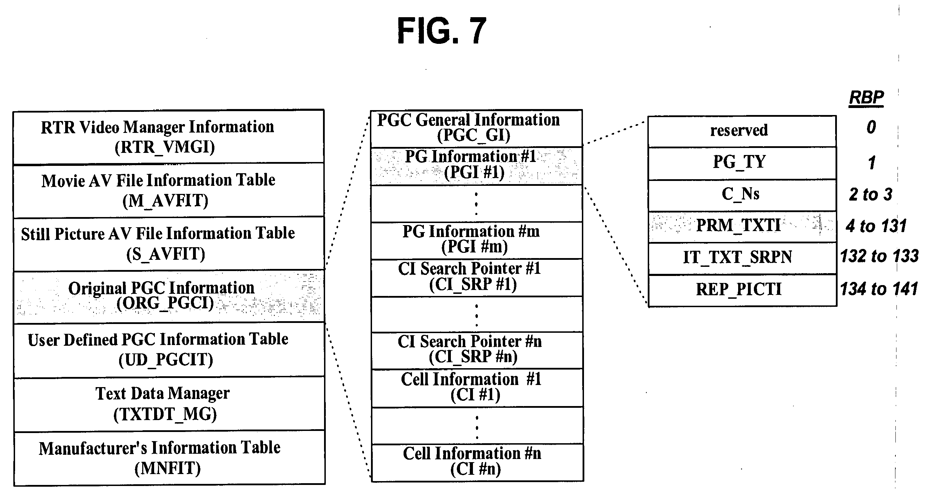

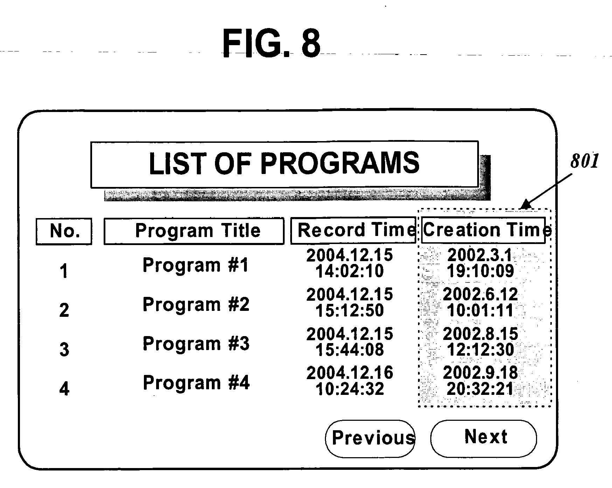

[1] The present invention relates to a method and apparatus for organizing time information for a content recorded on a recording medium, and more particularly, to an optical disc recorder and a method and apparatus to organize time information for a content recorded thereon.
[2] Apparatuses for capturing moving pictures such as movie cameras or 8 mm camcorders allow users to easily capture moving pictures. On the other hand, the use of recording apparatuses that can record moving pictures on a recording medium (e.g., disk recorder) is on the increase because writable optical disks are inexpensive and portable because of their low thickness. As shown in FIG. 1, users often connect a camcorder to a disk recorder and copy the moving pictures that had been captured by the camcorder to an optical disk for the purpose of storage of the moving pictures.
[3] After finishing the recording of A/V signals received from the camcorder on the optical disk, the disk recorder stores the date and time of the recording session in navigation information, which is also recorded on the optical disk. The recorded time, which is assumed to be inclusive of date, is stored in the navigation information and displayed when the user requests the list of recorded programs on the disc.
[4] When the user copies contents that were captured in the past on the camcorder to an optical disk as shown in FIG. 1, there is a considerable amount of difference between the time at which the contents were actually captured and the recording time that is written on the optical disk by the disk recorder.
[5] As described above, the related art disc recording apparatus and methods have various disadvantages. For example, the information displayed with the list of recorded programs does not provide the contents capture time (e.g., the time at which the content was captured). Because the user is likely to be interested in the contents capture time more than the contents recording time, the user may feel that the displayed time information is incorrect or insufficient. Further, the user can make errors in identifying recorded content by time. Thus, the user may become reluctant to use the disk recorder afterwards.
[6] The above references are incorporated by reference herein where appropriate for appropriate teachings of additional or alternative details, features and/or technical background.
[7] An object of the invention is to solve at least the above problems and/or disadvantages and to provide at least the advantages described hereinafter.
[8] Another object of the present invention to provide a method and apparatus for an optical disc recorder that can solve at least the above problems and/or disadvantages and to provide at least the advantages described hereinafter.
[9] Another object of the present invention to provide a method and apparatus wherein when a captured content is recorded on a recording medium, the content capture time as well as the content recording time is recorded on the recording medium.
[10] Another object of the present invention to provide a method and apparatus capable of organizing time information for content on an optical recording medium using the time of content creation or content recording.
[11] One method for recording a content in accordance with the invention can record an input content on a recording medium and then additionally records the creation time of the content that is provided together with the content on the recording medium.
[12] One method for reproducing a content recorded on a recording medium in accordance with the invention can read navigation information for the content from the recording medium and displays the tide of the content together with at least one of the recording time and the creation time of the content on a screen.
[13] In order to achieve at least the above objects in a whole or in part, in accordance with one aspect of the present invention there is provided a method of recording a content on a recording medium that includes recording an input content on the recording medium and recording a creation time of the content provided along with the content on the recording medium.
[14] To further achieve at least the above objects in a whole or in part, in accordance with one aspect of the present invention there is provided an apparatus for recording a content on a recording medium that includes a receiving unit configured to receive the content, a recording unit configured to record the received content on the recording medium and a control unit configured to control the recording unit to record the input content received by the receiving unit and navigation information for the content on the recording medium after adding a creation time of the content received together with the content and a time at which the content is recoded to the navigation information.
[15] To further achieve at least the above objects in a whole or in part, in accordance with one aspect of the present invention there is provided a method of displaying information about a content recorded on a recording medium that includes reading navigation information for a program recorded on the recording medium and displaying a first time information and a second time information included in the navigation information together with an item of the program on a screen.
[16] To further achieve at least the above objects in a whole or in part, in accordance with one aspect of the present invention there is provided a method of displaying information about a content recorded on a optical recording medium that includes reading navigation information for a program recorded on the recording medium and displaying a creation time information included in the navigation information together with an item of the program on a screen.
[17] Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.
[18] The invention will be described in detail with reference to the following drawings in which like reference numerals refer to like elements wherein:
[19] FIG. 1 illustrates an exemplary connection for copying moving pictures captured by a camera to a recording medium;
[20] FIG. 2 illustrates a block diagram of an optical disk recording/reproducing apparatus according to an embodiment of the present invention;
[21] FIG. 3 illustrates a flowchart of the method for managing time information for recorded programs in accordance with one embodiment of the present invention;
[22] FIG. 4 illustrates an exemplary relation between a recorded content and navigation information therefore;
[23] FIG. 5 illustrates the structure of exemplary VOB information in which recording time of a program is stored;
[24] FIG. 6 illustrates the structure of exemplary date and time information pertaining to a program stored in the VOB information shown in FIG. 5;
[25] FIG. 7 illustrates the structure of exemplary program information (PGI) in which information regarding a time at which the program was created is stored in accordance with one embodiment of the present invention; and
[26] FIG. 8 illustrates an exemplary screen wherein the content creation time and content recording time are displayed together in accordance with one embodiment of the present invention.
[27] FIG. 2 is a block diagram of an embodiment of an optical disk recording/reproducing apparatus 100 according to the invention and a moving picture capturing apparatus 200 (e.g., camcorder) coupled to the optical disk recording/reproducing apparatus 100. As shown in FIG. 2, the apparatus 100 can include a 1394 adaptor 11, a multiplexer 12, a recording DSP 13, an optical driver 14, an optical pickup 2, an RF unit 20, a reproduction DSP 21, a decoder 22, an OSD unit 33, a mixer 24, a servo control unit 31, a memory 32, a clock unit 34, and a microcomputer 30.
[28] The 1394 adaptor 11 can support a connection with another apparatus based on the IEEE1394 protocol. The multiplexer 12 can convert the A/V digital data received from the 1394 adaptor 11 into PES (packetized elementary stream) packets and multiplex the PES packets into a single stream. The recording DSP 13 can organize the sequence of PES packets into the ECC block format and modulate the data for recording. The optical driver 14 can provide electrical current to the optical pickup 2 according to the signal from the recording DSP 13. The optical pickup 2 reads signals recorded on an optical recording medium 1 such as a DVD+/R disk and records signals from the optical driver 14 on the recording medium 1. The RF unit 20 can generate binary signals and focusing and tracking error signals from the signal from the optical pickup 2.
[29] The reproduction DSP 21 can retrieve digital data from the binary signals and extract management information and navigation information from the retrieved digital data. The decoder 22 can demultiplex data from the reproduction DSP 21 into audio and video PES packets and decode each of the PES packets to generate audio and video signals. The OSD unit 33 can generate character and graphic signals to be overlaid on the main video image. The mixer 24 can combine or mix the video signal from the decoder 22 with the character and graphic signals from the OSD unit 33. The servo control unit 31 can control the optical pickup 2 using the focusing and tracking error signals, control the laser beams, and control a spindle motor for rotating the optical recording medium 1. The memory 32 can store data such as navigation information. The clock unit 34 can keep track of the current date and time. The microcomputer 30 can deal with user input, supervise operations of the apparatus and the like.
[30] The moving picture capturing apparatus 200 shown in FIG. 2 can be coupled to the optical disk recording/reproducing apparatus 100 through a digital interface such as the IEEE 1394 interface. When outputting A/V data through the digital interface, the moving picture capturing apparatus 200 can provide information pertaining to the A/V data as well as the A/V data. The information pertaining to the A/V data preferably includes the time at which the A/V data was captured, which will be utilized by the optical disk recording/reproducing apparatus 100.
[31] FIG. 3 shows a flowchart of an embodiment of a method for managing time information for a recorded material in accordance with the invention. The embodiment shown in Fig. of a method for managing time information for a recorded material shown in FIG. 3 can be applied to and will be described using the optical disk recording/reproducing apparatus 100 shown in FIG. 2. However, the invention is not intended to be so limited.
[32] A user can make a request for recording of input data to the recording/reproducing apparatus 100 using an input device that comes with the recording/reproducing apparatus 100 such as a remote controller and start playback of captured contents in the camcorder 200. Then, the captured contents to be recorded on the recording medium 1 can be provided from the camcorder 200 to the recording/reproducing apparatus 100 through a connecting cable (block S10).
[33] The microcomputer 30 of the recording/reproducing apparatus 100, responsive to the request from the user, can instruct the servo control unit 31 to rotate the recording medium 1 at a desired rotational velocity and to move the optical pickup 2 to a location on the recording medium where the data will be recorded.
[34] The A/V data received through the 1394 adaptor 11 can be organized into audio and video PES packets by the multiplexer 12. The PES packets can be constructed into the ECC block format for error correction by the recording DSP 13 and recorded on the recording medium 1 by the optical driver 14 and optical pickup 2 after being modulated into signals appropriate for recording (block S12).
[35] If a request for finishing the recording session is received from the user, the microcomputer 30 can update the navigation information that was loaded into the memory 32 when the recording medium 1 was loaded so that the information pertaining to the recorded content is added. The recorded content can be treated as a program by the recording/reproducing apparatus. For example, the added information can include cell information for the recorded section and program information (PGI) that references the cell information. The original program chain information (ORG_PGC) also preferably updated.
[36] FIG. 4 illustrates an exemplary relation between the recorded A/V contents and the navigation information therefore. As shown in FIG. 4, when program chain information is designated, program information included therein is preferably referenced. The cell information included in the program information can specify the section of the recorded contents, for example, through M_VOB information. A piece of program information may include more than one piece of cell information. Likewise, the original program chain information may include multiple pieces of program information.
[37] The M_VOB information can have a structure as shown in exemplary FIG. 5, wherein the time that has been kept track of by the clock unit 34 can be stored in the a field (e.g., the 5-byte VOB_REC_TM) included in the M_VOB generation information (M_VOB_GI) of the M_VOB information.
[38] FIG. 6 shows an exemplary format of the time stored in the 5-byte VOB_REC_TM field. The time value may be stored in the VOB_REC_TM field when the recording session begins instead of when the recording session is finished. However, the invention is not intended to be so limited.
[39] The microcomputer 30 may record the information pertaining to the creation time of the A/V data received through the 1.394 adaptor 11 in a different area in the navigation information, for example, in the primary text information (PRM_TXTI) field in the program information (PGI) as shown in FIG. 7. Since the first half (e.g., RBP4 through RBP67) of the PRM_TXTI field, which is of a length of 128 bytes, shall store ASCII coded data, the creation time can be stored in the ASCII format in the last 14 bytes (e.g., RBP54 through RBP67) of the first half. The remaining field of the first half can store a string data as a simple description about the recorded contents inputted by the user.
[40] As a result, M_VOB information associated with the recorded content, which can be managed as an M_VOB in the navigation information, can store the recording time of the content and program information contained in the original program chain information (ORG_PGCI) including the cell information indicating the M_VOB stores the creation time of the content (block S14). The creation time may be written in IT_TXT field specified by IT_TXT_SRPN field instead of the PRM_TXTI field, or other areas as well.
[41] However, the invention is not intended to be so limited. For example, it is possible to record the creation time in the VOB_REC_TM field and the recording time in the PRM_TXTI field. Also, it is also possible to record only the creation time in the VOB_REC_TM field. Thus, the creation time and recording time may be stored in the other fields. Accordingly, the creation time and the recording time can be directly or automatically stored without additional user actions.
[42] After updating the navigation information loaded in the memory 32, the microcomputer 30 can instruct the servo control unit 31 to record the updated navigation information in the navigation information area on the recording medium 1 using the recording DSP 13 and the optical pickup 2 (block S16).
[43] The navigation information including contents creation time information can then be read. Further, if the recording medium 1 is ejected and reinserted later, the navigation information including the contents creation time information can be read by the optical pickup 2 and loaded into the memory 32 by the reproduction DSP 21.
[44] If the user makes a request for the list of recorded contents (e.g., programs) using known input device or method (block S18), the microcomputer 30 can construct the list with reference to the original program chain information included in the navigation information loaded in the memory 32 and display the list such as shown in FIG. 8 through the OSD unit 33.
[45] To display both the creation time 801 and recording time for each of the recorded programs as shown in FIG. 8, the microcomputer 30 and read the information of the navigation data. For example, the microcomputer 30 can send the VOB_REC_TM field stored in the M_VOB general information (M_VOB_GI) included in the M_VOB information referenced by the associated cell information shown in FIG. 5 and read the PRM_TXTI field included in the associated program information shown in FIG. 7. The programs in the list (e.g., FIG. 8) may be sorted according to the creation time 801 when requested by the user.
[46] Since the creation time 801 of a recorded material as well as the recording time thereof can be displayed (block S20), the user can use more information to select a program from among the programs in the list. Thus, the selection can be more accurately performed by a user in reduced time.
[47] Instead of showing both the creation time and recording time simultaneously as shown in FIG. 8, the microcomputer 30 may show the recording (creation) time of each of the programs in the list first and show the creation (recording) time when the user selects "show recording times" using input means. However, the invention is not intended to be so limited.
[48] If one program is selected for playback, the microcomputer 30, with reference to the navigation information (e.g., time entry table, cell information, etc) loaded in the memory 32, preferably instructs the servo control unit 31 to move the optical pickup 2 to the location where the program is recorded to start a read operation therefrom. The high frequency signal read by the optical pickup 2 can be converted to a digital data stream by the RF unit 20 and the reproduction DSP 21 and then decoded into A/V signals by the decoder 23. Further, where the retrieved digital data is transmitted to an external apparatus through the 1394 adaptor 11, the microcomputer 30 can provide the creation time information together with the data to the external apparatus that requested the program after reading the information, for example, from the table shown in FIG. 7 (block S22).
[49] In one embodiment of a recording method, an input content is recorded on a recording medium and then the recording time and the creation time of the content with the content are recorded on the recording medium. In one embodiment of a reproduction method, both the creation time and recording time of a content recorded on a recording medium are displayed together with the program title.
[50] Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments. Furthermore, for ease of understanding, certain method procedures may have been delineated as separate procedures; however, these separately delineated procedures should not be construed as necessarily order dependent in their performance. That is, some procedures may be able to be performed in an alternative ordering, simultaneously, etc.
[51] As described above, embodiments of methods and apparatus for managing time information for recorded programs by a DVD player/recorder or the like having various advantages. For example, when a captured moving picture is copied to an optical disk, the time at which the picture was captured can be provided together with the content so that it is preserved after the copy operation. Thus, the user can be provided with more information about the content recorded on the optical disk that facilitates the selection of a recorded program.
[52] The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structures described herein as performing the recited function and not only structural equivalents but also equivalent structures.

## Claims

1. A method of recording a content on a recording medium, comprising:
recording an input content on the recording medium; and
recording a creation time of the content provided along with the content on the recording medium.

2. The method of claim 1, wherein the recording a creation time further records a time at which the input content is recorded on the recording medium.

3. The method of claim 2, wherein the creation time of the input content is inputted together with the input content.

4. The method of claim 3, comprising:
recording navigation information regarding the input content on the recording medium.

5. The method of claim 4, wherein the navigation information includes cell information for each recorded section, program information (PGI) for the recorded section, and program chain information (PCI).

6. The method of claim 5, wherein the navigation information includes the creation time and the recorded time of the input content.

7. The method of claim 6, wherein the creation time is transmitted in a text field of the PCI information of original PGI information of the input content.

8. The method of claim 7, wherein the creation time is automatically recorded without additional user action.

9. The method of any of claims 1 to 8, wherein the recording is performed by a disc recorder and the input content is received from a camcorder.

10. The method of claim 9, comprising:
displaying the creation time and the recorded time of the input content together with an item of the input content on a screen; and
reproducing the input content from the recording medium when the displayed item of the input content is selected.

11. An apparatus for recording a content on a recording medium, comprising:
a receiving unit configured to receive the content;
a recording unit configured to record the received content on the recording medium; and
a control unit configured to control the recording unit to record the content received by the receiving unit and navigation information for the content on the recording medium after adding a creation time of the content received together with the content and a time at which the content is recoded to the navigation information.

12. A method of displaying information about a content recorded on a recording medium, comprising:
reading navigation information for a program recorded on the recording medium; and
displaying a first time information and a second time information included in the navigation information together with an item of the program on a screen.

13. The method of claim 12, comprising:
reproducing the program from the recording medium when the displayed item of the program is selected.

14. The method of claim 12, wherein the first time information is a time at which the program was recorded on the recording medium, and the second time information is a time at which the program data was created.

15. The method of claim 14, wherein the navigation information includes cell information for each recorded section, program information (PGI) for the recorded section, and program chain information (PCI).

16. The method of claim 15, wherein the creation time is transmitted in a text field of the PCI information of original PGI information of the recorded content.

17. The method of any of claims 12 to 16, wherein the reading and displaying is performed by an optical disc reproducing/recording apparatus.

18. A method of displaying information about a content recorded on a optical recording medium, comprising:
reading navigation information for a program recorded on the recording medium; and
displaying a creation time information included in the navigation information together with an item of the program on a screen.

19. The method of claim 18, wherein the reading and displaying is preformed by an optical disc reproducing/recording apparatus.
